# EUROPÄISCHE PATENTSCHRIFT

(11) **EP 0 694 591 B1**
(45) Veröffentlichungstag und Bekanntmachung des Hinweises auf die Patenterteilung: **22.09.1999**
(21) Anmeldenummer: 95110389.4
(22) Anmeldetag: 04.07.1995
(51) Int. Cl.: C09C 1/50

(54) **Russreaktor und Verfahren zur Herstellung von Ofenruss**
Carbon black reactor and manufacturing process
Réacteur et procédé de fabrication de noir de four

(30) Priorität: 30.07.1994 DE 4427136
(43) Veröffentlichungstag der Anmeldung: 31.01.1996
(73) Patentinhaber: Degussa-Hüls Aktiengesellschaft, 60287 Frankfurt am Main (DE)
(72) Erfinder: Vogel, Karl, Dr., D-63755 Alzenau (DE); Meuser, Reinhold, Dr., D-50374 Erftstadt 12 (DE); Wunderlich, Armin, Dr., D-63546 Hammersbach (DE)

(56) Entgegenhaltungen:
- FR-A- 1 244 594
- FR-A- 1 244 714
- FR-A- 2 317 341

## Beschreibung

Die Erfindung betrifft einen Rußreaktor zur Herstellung von Ofenruß. Ofenruße, oder auch Furnaceruße, werden in großen Mengen für die verschiedensten technischen Anwendungen in Rußreaktoren erzeugt. Rußreaktoren bestehen im allgemeinen aus längs der Reaktorachse angeordneter Brennkammer, Mischkammer und Reaktionskammer, die miteinander in Verbindung stehen und einen Strömungspfad für die Reaktionsmedien von der Brennkammer über die Mischkammer zur Reaktionskammer bilden. In der Brennkammer wird zur Erzeugung einer hohen Temperatur ein Brennstoff, gewöhnlich Gas oder Öl, mit Hilfe eines Brenners unter Zugabe von vorgewärmter Verbrennungsluft verbrannt. In die heißen Verbrennungsgase wird ein meist flüssiger, kohlenstoffhaltiger Rußrohstoff, zum Beispiel ein Rußöl, eingesprüht, wobei ein Teil des Rußrohstoffes verbrennt und der Rest durch thermische Spaltung in Ruß und Restgas umgesetzt wird. Als Rußrohstoffe dienen zum Beispiel Kohlenwasserstoffe hocharomatischer Zusammensetzung wie Kohleteeröle, Ethylencrackerrückstände und andere Erdölprodukte.

Der Rußrohstoff wird gewöhnlich in eine als Engstelle ausgebildete Mischkammer eingesprüht oder eingespritzt, um durch die dort herrschenden großen Turbulenzen der Verbrennungsgase eine intensive Vermischung des Rußrohstoffes mit den heißen Verbrennungsgasen zu erreichen. Dieses Gemisch tritt dann in die Rußreaktionskammer ein, die gewöhnlich einen aufgeweiteten Querschnitt gegenüber der Engstelle besitzt. In dieser Reaktionskammer läuft der eigentliche Rußbildungsprozess aus Keimbildung mit anschließendem Wachstum der Rußkeime ab und wird stromabwärts durch Einsprühen von Wasser abgestoppt.

Die physikalischen und chemischen Prozesse, die während der Rußbildung ablaufen, sind sehr komplex. Die Wärme des Verbrennungsgases wird sehr schnell auf die zerstäubten Tröpfchen des Rußrohstoffes übertragen und führt zu einer mehr oder weniger vollständigen Verdampfung der Tröpfchen. Ein Teil des verdampften Rußrohstoffes wird in dem Überschuß der Verbrennungsluft verbrannt. Unter diesen Bedingungen werden die Moleküle des Rußrohstoffes dehydriert und bilden Rußkeime. Die Keimbildung ist im wesentlichen auf einen begrenzten Raumbereich, der Keimbildungszone, innerhalb der Reaktionskammer direkt hinter der Mischkammer begrenzt. Im stromabwärtigen Bereich der Reaktionskammer wachsen die Rußkeime zu kugel- bzw. nadelförmigen Primärteilchen heran. Die Primärteilchen wiederum lagern sich unter den reaktiven Bedingungen in der Reaktionskammer zu größeren fest miteinander verbundenen Aggregaten zusammen. Die Art und Weise dieser Zusammenlagerung wird gemeinhin als Struktur des Rußes bezeichnet.

Zur Charakterisierung der Ruße werden verschiedene analytische Testmethoden herangezogen. Die für die Anwendungen wichtigsten Testmethoden sind die Messung der Jodadsorption nach ASTM D 1510 als Maß für die spezifische Oberfläche von nichtoxidierten Rußen, die Bestimmung der CTAB-Oberfläche nach ASTM D 3765 sowie die DBP-Absorption nach ASTM D 2414 als Maß für die Rußstruktur. Die Aggregat-Abmessungen der Ruße werden nach ASTM D 3849 durch Bildanalyse von elektronenmikroskopischen Aufnahmen ermittelt. Weitere wichtige Kenngrößen der Ruße sind der Anteil flüchtiger (ASTM D 1620) und der Anteil extrahierbarer Bestandteile (DIN 53553) sowie der pH-Wert (ASTM D 1512).

Die genannten Kenngrößen bestimmen die Gebrauchseigenschaften der mit diesen Rußen modifizierten Materialien, wie zum Beispiel von Gummi oder von Lacken. Die unterschiedlichen Anwendungserfordernisse können nur durch eine Abstimmung der Rußeigenschaften auf den jeweiligen Einsatzfall erfüllt werden. Dementsprechend müssen moderne Rußreaktoren in der Lage sein, durch geeignete Änderung ihrer Betriebsparameter verschiedene Rußqualitäten zu erzeugen.

Die wesentlichen Einflußgrößen für die Rußbildung sind der Luft- bzw. Sauerstoffüberschuß in den Verbrennungsgasen, die Temperatur der Verbrennungsgase und die Reaktions- bzw. Verweildauer vom Einmischen des Rußrohstoffes in die Verbrennungsgase bis zum Abstoppen der Reaktion durch Abschrecken mit Wasser, welches in den stromabwärtigen Bereich der Reaktionskammer mittels einer Abschreckdüse eingesprüht wird.

Die Temperatur der Verbrennungsgase wird gewöhnlich auf einen Wert zwischen 1200 und 1900° C eingestellt. Je höher die Temperatur ist, je kleiner werden die gebildeten Rußaggegrate. Die Verweildauer beeinflußt ebenfalls die Aggregatgrößenverteilung. Sie ist in bekannten Rußreaktoren durch Strömungsgeschwindigkeit und Positionierung der Abschreckdüse zwischen 1 ms und 1 s einstellbar.

Aufgabe der vorliegenden Erfindung ist es, einen Rußreaktor anzugeben, der dem Fachmann einen weiteren Freiheitsgrad für die Beeinflussung der Rußeigenschaften, insbesondere der Teilchengrößenverteilung zur Verfügung stellt.

Eine weitere Aufgabe der Erfindung ist die Angabe eines Verfahrens zur Herstellung von Ruß, welches die von dem neuen Reaktor gegebenen Möglichkeiten zur Beeinflussung der Rußeigenschaften nutzt.

Die vorliegende Erfindung geht dabei von einem Reaktortyp aus, wie er in der DE-AS 25 30 371 offenbart ist. Der Reaktor dieser Auslegeschrift enthält längs der Reaktorachse eine Brennkammer, eine Mischkammer und eine Reaktionskammer, die miteinander in Verbindung stehen und einen Strömungspfad für die heißen Verbrennungsgase von der Brennkammer zur Reaktionskammer bilden. Die Mischkammer ist in Form einer axialen Engstelle in einer Trennwand angeordnet, die sich zwischen Brennkammer und Reaktionskammer befindet. Die Brennkammer weist stromaufwärts der Mischkammer Einlaßöffnungen für die Zufuhr von Verbrennungsluft sowie eine Brenneranordnung auf. In der Mischkammer sind ein oder mehrere Sprüh- oder Spritzdüsen für Rußrohstoff vorgesehen. Zum Abstoppen der Rußbildungsreaktion enthält die Reaktionskammer stromabwärts der Mischkammer mindestens eine Abschreckdüse zum Einsprühen von Wasser in den rußbeladenen Gasstrom.

Der erfindungsgemäße Rußreaktor ist gegenüber diesem aus dem Stand der Technik bekannten Reaktor dadurch gekennzeichnet, daß Brennkammer und Reaktionskammer zusätzlich zur Mischkammer durch mindestens eine außeraxial angeordnete Nebenschlußbohrung in der Trennwand miteinander in Verbindung stehen. Durch diese Konstruktion wird der von der Brennkammer zur Reaktionskammer strömende Strom heißer Verbrennungsgase in einen durch die Mischkammer strömenden Zentralstrom und in durch die Nebenschlußbohrungen strömende Nebenströme aufgeteilt.

Durch die Nebenschlußbohrungen können die heißen Verbrennungsgase sowie gegebenenfalls überschüssige Luft direkt von der Brennkammer ohne den Umweg über die Mischkammer in den Reaktionsraum gelangen. Hier führt der eventuell noch nicht verbrauchte Sauerstoffanteil der Verbrennungsluft zu einer teilweisen Nachverbrennung des Rußrohstoffes. Da die Nebenschlußbohrungen außeraxial angeordnet sind, wird in der Reaktionskammer ein stark inhomogenes Temperaturprofil quer zur Reaktorachse erzeugt. Auf der Reaktorachse sind die Temperaturen am geringsten, da durch das Einspritzen des Rußöles die Verbrennungsabgase abgekühlt werden. Im Randbereich wird dagegen die Temperatur durch die heißen Verbrennungsgase und gegebenenfalls durch eine zusätzliche Nachverbrennung angehoben.

Diese Maßnahmen führen somit im Randbereich der Reaktionskammer hinter der Mischkammer zu einer Hochtemperaturzone, durch welche sich die für die Eigenschaften des fertigen Rußes wichtige Keimbildungszone erweitern kann. Die Keimbildungszone befindet sich in der Reaktionskammer unmittelbar hinter der Mischkammer und kann sich je nach dem Ort der Einmischung des Rußrohstoffes bis in die Mischkammer hinein erstrecken.

Die hier gewählten Bezeichnungen "Mischkammer" und "Reaktionskammer" bedeuten also nicht, daß sich der Rußbildungsprozeß tatsächlich scharf in die Schritte "Einmischen des Rußrohstoffes in die heißen-Verbrennungsgase" und "Rußbildung" trennen läßt. Vielmehr startet die Rußbildung schon in der Mischkammer kurz nach dem Einsprühen oder Einspritzen des Rußöles in die Verbrennungsgase und setzt sich dann in der Reaktionskammer fort.

Bei konventionellen Reaktoren ist die Keimbildungszone auf einen mehr oder weniger engen Raumbereich um die Reaktorachse herum begrenzt. Durch die erfindungsgemäßen Nebenschlußbohrungen kann die Keimbildungszone über nahezu den gesamten Querschnitt der Reaktionskammer ausgedehnt werden. Während bei konventionellen Rußreaktoren die Gefahr besteht, daß ein gewisser Prozentsatz der Tröpfchen des Rußrohstoffes die Keimbildungszone in radialer Richtung verlassen und sich auf der Wandung der Reaktionskammer unter Bildung von Koks niederschlagen, ist diese Gefahr beim erfindungsgemäßen Reaktor infolge der außen liegenden Hochtemperaturzone erheblich vermindert.

Zur Erzeugung der heißen Verbrennungsgase werden üblicherweise Erdgas, Öl oder andere Brennstoffe in Luft verbrannt. Durch Regelung des Luft/Brennstoffverhältnisses kann die Verbrennung unterstöchiometrisch, stöchiometrisch oder auch überstöchiometrisch geführt werden.

Die Temperatur der Verbrennungsgase hängt entscheidend von dem eingestellten Luft/Brennstoffverhältnis ab.

Gewöhnlich wird die Verbrennung überstöchiometrisch, das heißt mit Luftüberschuß, betrieben. Je mehr sich das Luft/Brennstoffverhältnis dem stöchiometrischen Wert nähert, um so heißer werden die Verbrennungsgase. Bei stöchiometrischer Verbrennung werden Spitzentemperaturen bis 2200° C erreicht. Üblicherweise wird jedoch mit Luftüberschuß und Verbrennungstemperaturen zwischen 1200 und 1900° C gearbeitet. Der Luftüberschuß wird dabei, wie schon beschrieben, zu einer definierten Nachverbrennung in der Reaktionskammer genutzt.

Somit kann also durch Wahl der Art der Verbrennung und direkter Injektion der heißen Verbrennungsgase in die peripheren Bereiche der Reaktionskammer die Temperatur in diesen Bereichen in weiten Grenzen variiert und die für die Keimbildung wichtige Hochtemperaturzone erheblich verbreitert werden.

Die Sprüh- oder Spritzdüsen zur Einmischung des Rußrohstoffes in den Strom der heißen Verbrennungsgase können längs der Mischkammer in der Art angeordnet sein, daß sie den Rußrohstoff von der Wandung der Mischkammer radial nach innen in den Strom der Verbrennungsgase einmischen. Zu diesem Zweck können die Sprüh- oder Spritzdüsen mit ihren notwendigen Versorgungsleitungen durch radiale Bohrungen in der Trennwand bis an die Mischkammer herangeführt sein. Die Düsen können längs der Mischkammer und auf dem Umfang der Mischkammer verteilt angeordnet sein. Durch entsprechend ausgerichtete Düsen kann der Rußrohstoff auch mit einer stromabwärts oder stromaufwärts gerichteten Komponente in die Verbrennungsgase eingemischt werden.

Bevorzugt wird der Rußrohstoff jedoch mittels einer axialen Injektorlanze, an deren Kopf sich die Sprüh- oder Spritzdüsen befinden, in die Verbrennungsgase eingemischt.

Die Injektorlanze ist dazu durch eine Einlaßöffnung der Brennkammer bis in die Mischkammer geführt und kann zur Positionierung der Düsen vor, innerhalb oder kurz hinter der Mischkammer in axialer Richtung verschoben werden.

Bevorzugt erfolgt die Zugabe des Rußrohstoffes an einer Position innerhalb der Mischkammer. Dadurch werden die heißen Verbrennungsgase gezwungen, durch den Ringkanal, der von der Wandung der Mischkammer und der axial angeordneten Injektorlanze gebildet wird, von der Brennkammer zur Reaktionskammer zu strömen. Die Gasströmung im Ringkanal ist hochturbulent. Die Strömungsgeschwindigkeiten liegen zwischen 400 m/sec und 900 m/sec. In diese hochturbulente Gasströmung wird der Rußrohstoff eingespritzt und infolge der Turbulenzen intensiv vermischt.

Die Sprüh- oder Spritzdüsen können am Kopf der Injektorlanze so angeordnet werden, daß sie den Rußrohstoff in radialer Richtung nach außen und/oder axial in stromabwärtiger Richtung in die heißen Verbrennungsgase einmischen.

Die beiden alternativen Vorgehensweisen bei der Rußrohstoffeinmischung - das Einmischen von den Wandungen der Mischkammer nach innen und das Einmischen mittels der Injektorlanze - können auch kombiniert werden.

Als Sprüh- oder Spritzdüsen können sowohl Einstoff- als auch Zweistoffdüsen verwendet werden, wobei im Falle von Zweistoffdüsen neben dem Rußrohstoff noch Wasserdampf, Wasserstoff sowie inerte und/oder kohlenstoffhaltige Gase zur Anwendung kommen können.

Die Mischkammer kann mit unterschiedlichen Längsquerschnitten versehen werden. Im einfachsten Fall handelt es sich bei der Mischkammer um eine zylindrische Kammer mit konstantem Strömungsquerschnitt in axialer Richtung. Vorteilhaft ist die Verwendung einer Mischkammer mit sich stromabwärts von der Brennkammer zur Reaktionskammer verengendem Strömungsquerschnitt. Kurz vor der Reaktionskammer kann eine erneute Aufweitung der Mischkammer erfolgen, bevorzugt wird jedoch eine abrupte Querschnittsänderung beim Übergang vom engsten Querschnitt der Mischkammer zum größeren Querschnitt der Reaktionskammer angewendet. Dadurch werden hohe Turbulenzen der mit Rußrohstoff beladenen Verbrennungsgase erzeugt. Zu diesem Zweck besitzt die Reaktionskammer einen Durchmesser, der das 2- bis 12-fache des kleinsten Durchmessers der Mischkammer, bevorzugt das 5- bis 10-fache, beträgt.

Im Falle von Mischkammern mit in axialer Richtung konvergierendem Querschnitt wird es möglich, den Zentralstrom der Verbrennungsgase durch axiales Verschieben der Injektorlanze zu beeinflussen und somit das Verhältnis der Nebenströme zum Volumenstrom des Zentalstroms zu verändern.

Das Verhältnis des kleinsten Durchmessers der Mischkammer zum Durchmesser der Injektorlanze liegt bevorzugt in einem Bereich zwischen 1,1 : 1 und 5 : 1. Um eine optimale Durchmischung von Verbrennungsgasen und Rußöl zu erhalten, sollte die Länge der Mischkammer bzw. die Dicke der Trennwand zwischen Brennkammer und Reaktionskammer 50 bis 500 mm betragen.

Zweckmäßigerweise werden die außeraxialen Nebenschlußbohrungen auf einem oder mehreren Lochkreisen angeordnet. Das in der Reaktionskammer sich einstellende Temperaturprofil kann dabei durch verschiedene Maßnahmen beeinflußt werden. Entscheidend ist dabei das Verhältnis der Volumenströme der Verbrennungsgase durch die Nebenschlußbohrungen zu dem Volumenstrom der Verbrennungsgase durch die Mischkammer.

Das Verhältnis der Volumenströme bei einer gegebenen Reaktorgeometrie hängt von dem Flächenverhältnis der Summe der Strömungsquerschnitte aller Nebenschlußbohrungen zur Fläche des engsten Strömungsquerschnittes der Mischkammer ab. Das Flächenverhältnis kann zwischen 0,1 : 1 und 10 : 1 liegen, bevorzugt wird ein Wert zwischen 1 : 1 und 10 : 1 gewählt.

Wie schon erläutert, kann das Verhältnis der Volumenströme auch bei gegebener Reaktorgeometrie noch durch geeignete Positionierung der Injektorlanze in der Mischkammer verändert werden. Die Verschiebung der Injektorlanze hat jedoch auch direkten Einfluß auf den Rußbildungsprozeß. In einer besonderen Ausführungsform des Reaktors wird deshalb das Verhältnis der Volumenströme durch Verwenden von keramischen Stopfen variiert, mit denen die Strömungsquerschnitte der Nebenschlußbohrungen von einem Maximalwert kontinuierlich verringert oder vollständig verschlossen werden können. Die Stopfen können beispielsweise mit Hilfe von bevorzugt achsenparallelen Lanzen durch die Brennkammer hindurch an die Öffnungen der Nebenschlußbohrungen in der Trennwand herangeführt werden. Die Stopfen aller Nebenschlußbohrungen können dabei synchron oder unabhängig voneinander betätigt werden. Durch unabhängiges Betätigen der Stopfen können zum Beispiel Asymmetrien in der Raktionskammer ausgeglichen oder zur Erzielung bestimmter Effekte erst erzeugt werden.

Eine weitere Beeinflussung des Temperaturprofiles in der Reaktionskammer erreicht man dadurch, daß die Nebenschlußbohrungen gegenüber der Reaktorachse geneigt sein können. Der Neigungswinkel sollte dabei in einem Bereich zwischen ± 45° liegen. Dadurch werden die außeraxialen Gasströme entweder mehr in den Randbereich oder ins Zentrum der Reaktionskammer gerichtet.

Ein weiterer Freiheitsgrad für die Einstellung des Temperaturprofils in der Reaktionskammer ist dem Fachmann dadurch gegeben, daß die Verbrennungsluft der Brennkammer auf unterschiedliche Art und Weise zugeführt werden kann.

Zum einen kann die Verbrennungsluft zur Erzeugung einer starken Drallströmung tangential in die Brennkammer eingeführt werden. Eine drallfreie Strömung wird erhalten, wenn die Verbrennungsluft der Brennkammer axial zugeführt wird.

Weiterhin hat es sich als vorteilhaft erwiesen, in der Wandung der Reaktionskammer stromaufwärts der Abschreckdüse weitere Sprüh- oder Spritzdüsen für Rußrohstoff oder andere Substanzen vorzusehen. Bei diesen Substanzen kann es sich um gasförmige Kohlenwasserstoffe, feinteilige Ruß- oder Kohledispersionen und/oder inerte Stoffe wie zum Beispiel Stickstoffgas handeln. Diese Stoffe können entweder radial nach innen oder mit einer stromaufwärts oder stromabwärts gerichteten Komponente in die durch die Nachverbrennung erzeugten heißen peripheren Bereiche der Reaktionskammer eingesprüht oder eingespritzt werden.

Die Figuren 1 bis 4 zeigen verschiedene Ausführungsformen und Einzelheiten erfindungsgemäßer Rußreaktoren.
- Figur 1:: Rußreaktor mit Nebenschlußbohrungen und axialer Zuführung der Verbrennungsluft
- Figur 2:: Rußreaktor mit Nebenschlußbohrungen und tangentialer Zuführung der Verbrennungsluft
- Figur 3:: Draufsicht auf die Trennwand zwischen Brennkammer und Reaktionskammer
- Figur 4:: Mischkammer mit sich konisch in Strömungsrichtung der Verbrennungsgase verengendem Querschnitt

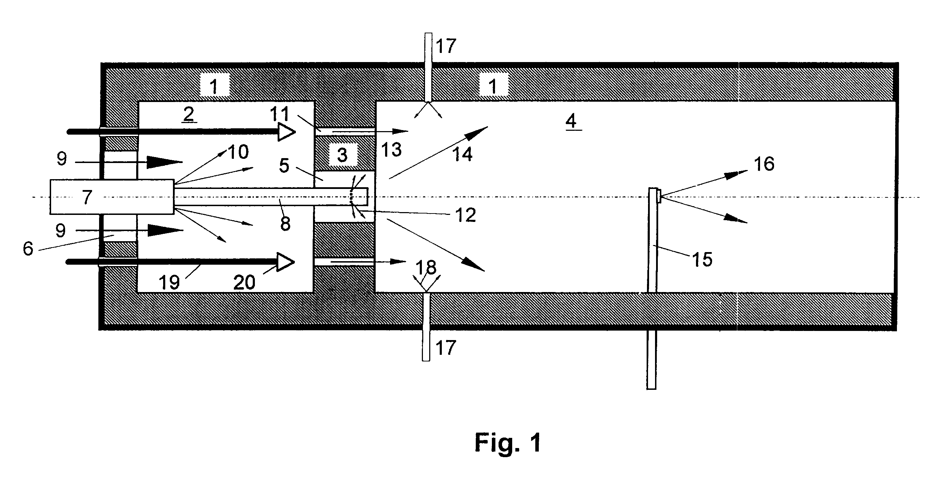

Figur 1 zeigt den Längsquerschnitt eines erfindungsgemäßen Rußreaktors mit axialer Zuführung der Verbrennungsluft. Die Brennkammer (2), die Mischkammer (5) und die Reaktionskammer (4) sind mit einer hochfeuerfesten Ausmauerung (1) auf Basis von Aluminiumoxid oder Zirkonoxid versehen. Brennkammer und Reaktionskammer sind durch die Trennwand (3) voneinander getrennt. Eine Verbindung zwischen beiden Kammern wird durch die als axiale Bohrung in der Wand (3) ausgeführte Mischkammer (5) hergestellt. Verbrennungsluft und Brennstoff werden dem Rußreaktor durch eine stromaufwärts der Mischkammer in der Brennkammer befindliche axiale Öffnung (6) zugeführt. Für das Einsprühen des Rußrohstoffes (12) in die Mischkammer (5) wird eine axial angeordnete Injektorlanze (8) verwendet.

Der Brennstoff (10) gelangt über einen Brenner (7), der in diesem Fall die Injektorlanze (8) in Form einer Hülse umgibt, in die Brennkammer (2). Die Verbrennungsluft (9) wird der Brennkammer über den verbleibenden freien Querschnitt der Öffnung (6) axial und drallfrei zugeführt.

Die vom Brenner erzeugten heißen Verbrennungsgase gelangen über den zwischen der axialen Injektorlanze und der Wandung der Mischkammer (5) gebildeten Ringkanal in die Reaktionskammer (4). Die Sprüh- bzw. Spritzdüsen für den Rußrohstoff sind im Kopfbereich der Injektorlanze auf den Umfang der Lanze verteilt und mischen den Rußrohstoff in die durch den Ringkanal strömenden Verbrennungsgase ein.

Durch die abrupte Querschnittsänderung beim Übergang von der Mischkammer (5) in die Reaktionskammer (4) wird das Gemisch aus Rußrohstoff und heißen Verbrennungsgasen (14) zusätzlich stark verwirbelt. In der Reaktionskammer (4) findet dann die eigentliche Rußbildung statt. Zum Abstoppen der Rußbildung wird über die Abschreckdüse (15) Wasser (16) in die Reaktionskammer eingesprüht.

Zur Einstellung des Temperaturprofils in der Reaktionskammer (4) sind erfindungsgemäß Nebenschlußbohrungen (11) in die Trennwand (3) zwischen Brennkammer und Reaktionskammer eingebracht. Diese Nebenschlußbohrungen (11) ermöglichen es den heißen Verbrennungsgasen, ohne Umweg über die Mischkammer (5) in die Reaktionskammer (4) zu gelangen. Während die durch die Mischkammer (5) hindurchtretenden Verbrennungsgase durch das Einsprühen des Rußrohstoffes abgekühlt werden, behalten die Verbrennungsgase (13), die durch die Kurzschlußbohrungen direkt in die Reaktionskammer (4) gelangen, ihre Temperatur nahezu unverändert bei. Die Verbrennungsgase (13) enthalten je nach Führung der Verbrennung noch unverbrauchten Sauerstoff, der in der Reaktionskammer zu einer teilweisen Nachverbrennung des Rußrohstoffes führt. Durch diese Gegebenheiten stellt sich in der Reaktionskammer ein Temperaturprofil quer zur Reaktorachse ein, welches von der Reaktorachse zur Reaktorwand hin ansteigt.

Durch Sprüh- oder Spritzdüsen (17), die durch die Wandung der Reaktionskammer geführt sind, können zusätzlicher Rußrohstoff oder andere Substanzen (18) in die heißen peripheren Bereiche der Reaktionskammer eingeführt werden.

Zur Regelung des Volumenstromes durch die Nebenschlußbohrungen sind axial verschiebbare Lanzen (19) in die Brennkammer eingeführt. An den Enden der Lanzen befinden sich kegelförmige Keramikstopfen (20). Durch Heranführen der Stopfen an die Öffnungen der Nebenschlußbohrungen in der Trennwand kann der Volumenstrom durch die Nebenschlußbohrungen gedrosselt oder ganz unterbunden werden.

Injektorlanze (8) und Lanzen (19) können zum Schutz vor den heißen Verbrennungsgasen wassergekühlt sein.

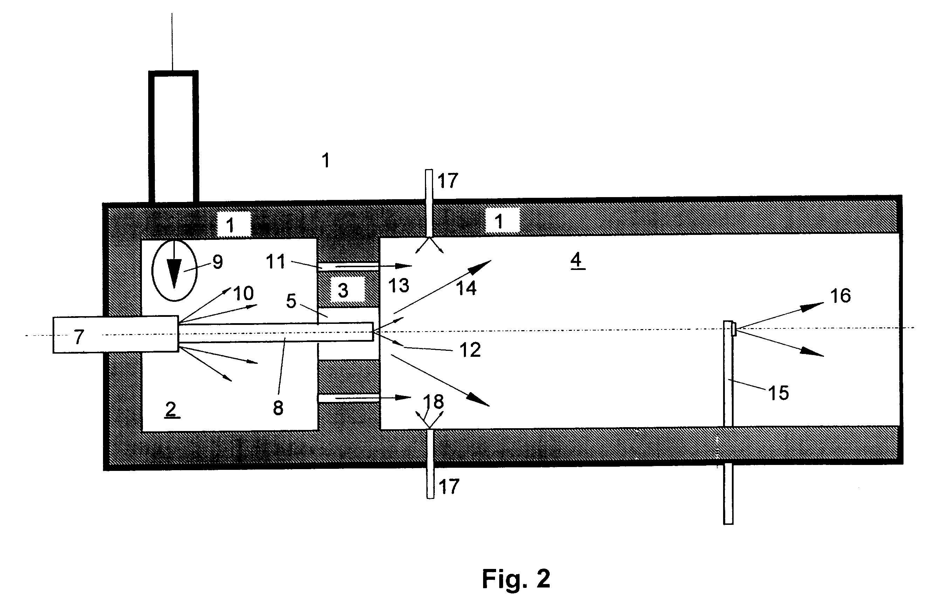

Figur 2 zeigt einen ähnlichen Reaktor wie in Figur 1. Die Zufuhr der Verbrennungsluft (9) erfolgt jedoch nicht axial, sondern tangential quer zur Reaktorachse. Dadurch wird den Verbrennungsgasen ein starker Drall verliehen. Außerdem wird bei dieser Ausführungsform des Rußreaktors der Rußrohstoff (12) in axialer Richtung in die heißen Verbrennungsgase eingemischt. Dazu befinden sich die Sprüh- oder Spritzdüsen direkt am Kopf der Injektorlanze.

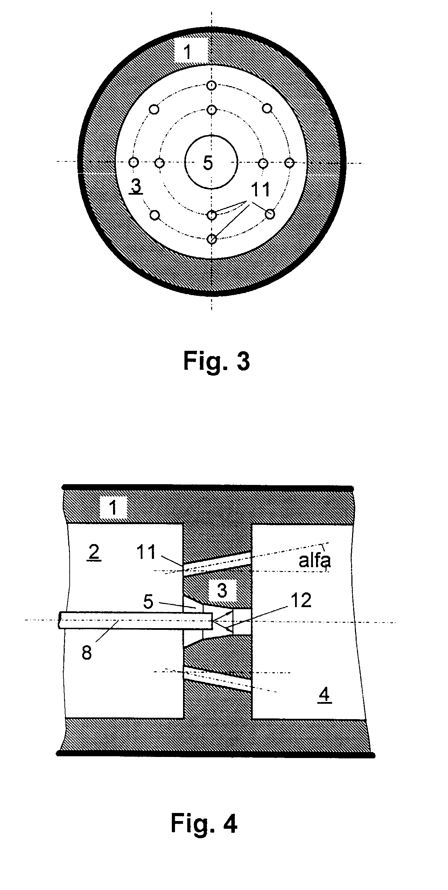

Figur 3 zeigt eine Draufsicht auf die Trennwand (3) zwischen Brennkammer und Reaktionskammer. In dieser Ausführungsform des erfindungsgemäßen Reaktors sind 12 Nebenschlußbohrungen vorgesehen, die auf zwei Lochkreisen mit unterschiedlichen Durchmessern angeordnet sind.

Figur 4 zeigt eine Querschnittsdarstellung der Trennwand (3) zwischen Brennkammer und Reaktionskammer. Die Nebenschlußbohrungen (11) sind bei dieser Ausführungsform des Reaktors gegenüber der Reaktorachse um einen Winkel geneigt. Die Wahl des Neiungswinkels hängt von den Erfordernissen bezüglich des Temperaturprofiles in der Reaktionskammer ab. Die Nebenschlußbohrungen können sowohl nach außen als auch nach innen geneigt sein, d. h. der Winkel α kann sowohl positive als auch negative Werte annehmen. Es ist auch möglich, in einem Reaktor Bohrungen mit verschiedenen Neigungen miteinander zu kombinieren.

Die Ausführungsform des Reaktors von Figur (4) weist ein spezielles Längsprofil der Mischkammer (5) auf. Der Querschnitt der Mischkammer nimmt von der Brennkammer zur Reaktionskammer hin ab. Durch axiales Verschieben der Injektorlanze für den Rußrohstoff ist es aufgrund dieses Längsprofiles möglich, das Verhältnis der Volumenströme der Verbrennungsgase, die durch die Nebenschlußbohrungen strömen, zu den Verbrennungsgasen, die durch die Mischkammer in die Reaktionskammer strömen, zu verändern. Die Wahl des geeigneten Längsprofils der Mischkammer hängt dabei von der gewünschten Regelcharakteristik für diese Volumenstromeinstellungen ab.

Bei einer konkreten Ausführungsform des Reaktors nach Figur 1 kamen folgende Abmessungen zur Anwendung:

| | |
|---|---|
| Durchmesser der Brennkammer: | 700 mm |
| | |
| Länge der Brennkammer | 650 mm |
| | |
| Durchmesser der Einlaßöffnung in der Brennkammer | 350 mm |
| | |
| Durchmesser des Brennerrohres | 100 mm |
| | |
| Durchmesser der Injektorlanze | 70 mm |
| | |
| Dicke der Trennwand | 250 mm |
| | |
| Durchmesser der Mischkammer auf der der Brennkammer zugewandten Seite der Trennwand | 120 mm |
| | |
| Durchmesser der Mischkammer auf der der Reaktionskammer zugewandten Seite der Trennwand | 80 mm |
| | |
| Zahl der Nebenschlußbohrungen | 12 |
| | |
| Durchmesser der Nebenschlußbohrungen | 50 mm |
| | |
| Durchmesser des Lochkreises der Nebenschlußbohrungen | 500 mm |
| | |
| Neigung der Nebenschlußbohrungen nach innen um 10° | |
| Durchmesser der Reaktionskammer | 900 mm |

## Patentansprüche

1. Reaktor für die Herstellung von Ofenruß enthaltend längs der Reaktorachse eine Brennkammer, eine Mischkammer und eine Reaktionskammer, die miteinander in Verbindung stehen und einen Strömungspfad für die heißen Verbrennungsgase von der Brennkammer über die Mischkammer zur Reaktionskammer bilden, wobei die Mischkammer in Form einer axialen Engstelle in einer die Brennkammer und Reaktionskammer voneinander trennenden Trennwand ausgeführt ist, die Brennkammer stromaufwärts der Mischkammer Einlaßöffnungen für die Zufuhr eines sauerstoffhaltigen Gases und eine Brenneranordnung aufweist sowie in der Mischkammer ein oder mehrere Sprüh- oder Spritzdüsen für Rußrohstoff vorgesehen sind und in der Reaktionskammer stromabwärts der Mischkammer mindestens eine Abschreckdüse für Wasser zum Abstoppen der Rußbildungsreaktion angeordnet ist,
**dadurch gekennzeichnet**,
daß Brennkammer und Reaktionskammer zusätzlich zur Mischkammer durch mindestens eine außeraxial angeordnete Nebenschlußbohrung in der Trennwand miteinander in Verbindung stehen.

2. Reaktor nach Anspruch 1,
**dadurch gekennzeichnet**,
daß sich die Sprüh- oder Spritzdüsen für den Rußrohstoff am Kopf einer axialen Injektorlanze befinden, die zur Positionierung der Düsen relativ zur Strömungsrichtung der Verbrennungsgase vor, innerhalb oder kurz hinter der Mischkammer in axialer Richtung verschoben werden kann und daß die Sprüh- oder Spritzdüsen den Rußrohstoff in axialer Richtung nach außen und/oder axial in stromabwärtiger Richtung in den Strom der heißen Verbrennungsgase einmischen.

3. Reaktor nach einem der Ansprüche 1 oder 2,
**dadurch gekennzeichnet**,
daß die Mischkammer einen in axialer Richtung konstanten Strömungsquerschnitt oder einen stromabwärts von der Brennkammer zur Reaktionskammer sich verengenden Strömungsquerschnitt aufweist.

4. Reaktor nach einem der-Ansprüche 1 bis 3,
**dadurch gekennzeichnet**,
daß die Nebenschlußbohrungen konzentrisch auf einem oder mehreren Lochkreisen um Mischkammer und Reaktorachse herum angeordnet sind und gegenüber der Reaktorachse um ± 45° geneigt sein können.

5. Reaktor nach den Ansprüchen 1 bis 4,
**dadurch gekennzeichnet**,
daß das Flächenverhältnis der Summe der Querschnittsflächen aller Nebenschlußbohrungen zur Querschnittsfläche des engsten Querschnittes der Mischkammer zwischen 0,1 : 1 und 10 : 1, bevorzugt zwischen 1 : 1 und 10 : 1 liegt.

6. Reaktor nach einem der Ansprüche 1 bis 5,
**dadurch gekennzeichnet**,
daß die Strömungsquerschnitte der Nebenschlußbohrungen mittels keramischer Stopfen kontinuierlich verringert oder vollständig verschlossen werden können.

7. Reaktor nach den Ansprüchen 1 bis 6,
**dadurch gekennzeichnet**,
daß in der Wandung der Reaktionskammer stromaufwärts der Abschreckdüse weitere Sprüh- oder Spritzdüsen für kohlenstoffhaltige Rußrohstoffe, feinteilige Ruß- oder Kohledispersionen und/oder inerte Gase vorgesehen sind, wobei diese Düsen entweder radial nach innen oder unter einem Winkel gegen die Reaktorachse von kleiner als 90° stromaufwärts oder stromabwärts ausgerichtet sind.

8. Reaktor nach den Ansprüchen 1 bis 7,
**dadurch gekennzeichnet**,
daß das Verhältnis des kleinsten Durchmessers der Mischkammer zum Durchmesser der Injektorlanze im Bereich zwischen 1,1 : 1 und 5 : 1 liegt und die Trennwand zwischen Brennkammer und Reaktionskammer eine Dicke zwischen 50 und 500 mm aufweist.

9. Verfahren zur Herstellung von Ruß durch Erzeugen eines Stromes heißer Verbrennungsgase in einer Brennkammer, Führen der heißen Verbrennungsgase längs einer Strömungsachse von der Brennkammer durch eine Mischkammer in eine Reaktionskammer, wobei der Strömungsquerschnitt der Mischkammer gegenüber der Brennkammer und der Reaktionskammer verringert ist, Einmischen von Rußrohstoff in die Strömung der Verbrennungsgase vor, innerhalb oder hinter der Mischkammer durch Einsprühen oder Einspritzen des Rußrohstoffes, Abstoppen der Rußbildung stromabwärts in der Reaktionskammer durch Einsprühen von Wasser und Abtrennen des gebildeten Rußes von dem Strom der Verbrennungsgase,
**dadurch gekennzeichnet**,
daß die Verbrennungsgase vor dem Eintritt in die Mischkammer in einen Zentralstrom und einen oder mehrere Nebenströme aufgeteilt werden, daß der Zentralstrom durch die Mischkammer geführt und mit Rußrohstoff beladen wird und daß die Nebenströme nach Expansion des Zentralstromes in der Reaktionskammer den peripheren Bereichen des Zentralstromes zugeführt werden.

10. Verfahren nach Anspruch 9,
**dadurch gekennzeichnet**,
daß die Nebenströme konzentrisch auf einem oder mehreren Lochkreisen um die Strömungsachse herum verteilt sind und dem Zentralstrom unter einem Winkel zwischen ± 45° zur Strömungsachse zugeführt werden.

11. Verfahren nach den Ansprüchen 9 oder 10,
**dadurch gekennzeichnet**,
daß das Verhältnis der Summe der Nebenströme zum Volumenstrom des Zentralstromes zwischen 0,1 : 1 und 10 : 1, bevorzugt zwischen 1 : 1 und 10 : 1 liegt.

12. Verfahren nach den Ansprüchen 10 bis 11, **dadurch**
gekennzeichnet,
daß der gesamte Volumenstrom der Nebenströme kontinuierlich zwischen 0 und seinen Maximalwert einstellbar ist.

13. Verfahren nach einem der Ansprüche 11 bis 12,
**dadurch gekennzeichnet**,
daß die Volumenströme der Nebenströme unabhängig voneinander zwischen 0 und ihren Maximalwerten einstellbar sind.

14. Verfahren nach einem der Ansprüche 11 bis 13,
**dadurch gekennzeichnet**,
daß den peripheren Bereichen der rußbeladenen Verbrennungsgase in der Reaktionskammer vor dem Abstoppen der Rußbildung weitere kohlenstoffhaltige Rußrohstoffe, feinteilige Ruß- oder Kohledispersionen und/oder inerte Gase zugeführt werden.

## Claims

1. Reactor for the manufacture of furnace black, containing along the reactor axis a combustion chamber, a mixing chamber and a reaction chamber, which are connected to one another and form a flow path for the hot combustion gases from the combustion chamber via the mixing chamber to the reaction chamber, wherein the mixing chamber is constructed in the form of an axial narrow point in a partition separating the combustion chamber and the reaction chamber from one another, the combustion chamber comprises upstream of the mixing chamber inlet openings for the feeding of an oxygen-containing gas and a burner arrangement, and in the mixing chamber one or more spray or injection nozzles for carbon black raw material are provided and in the reaction chamber downstream of the mixing chamber at least one quenching nozzle for water for stopping off the carbon black formation reaction is arranged,
characterised in that
combustion chamber and reaction chamber are in addition to the mixing chamber connected to one another by at least one extra-axially disposed bleed bore in the partition.

2. Reactor according to claim 1,
characterised in that
the spray or injection nozzles for the carbon block raw material are located at the head of an axial injector lance, which for the positioning of the nozzles relative to the flow direction of the combustion gases can be displaced in axial direction before, inside or slightly behind the mixing chamber, and that the spray or injection nozzles mix the carbon black raw material into the flow of the hot combustion gases in axial direction outwardly and/or axially in the downstream direction.

3. Reactor according to one of claims 1 or 2,
characterised in that
the mixing chamber has a flow cross-section constant in axial direction or a flow cross-section narrowing downstream from the combustion chamber to the reaction chamber.

4. Reactor according to one of claims 1 to 3,
characterised in that
the bleed bores are arranged concentrically in one or more hole circles around mixing chamber and reactor axis and can be inclined relative to the reactor axis by ± 45 °.

5. Reactor according to claims 1 to 4,
characterised in that
the area ratio of the sum of the cross-sectional areas of all the bleed bores to the cross-sectional area of the narrowest cross-section of the mixing chamber lies between 0.1 : 1 and 10 : 1, preferably between 1 : 1 and 10 : 1.

6. Reactor according to one of claims 1 to 5,
characterised in that
the flow cross-sections of the bleed bores can be continuously reduced or fully sealed by means of ceramic plugs.

7. Reactor according to claims 1 to 6,
characterised in that
in the side of the reaction chamber are provided upstream of the quenching nozzle further spray or injection nozzles for carbon-containing carbon black raw materials, finely-divided carbon black or coal dispersions and/or inert gases, wherein said nozzles are aligned upstream or downstream either radially inwards or at an angle with respect to the reactor axis of less than 90°.

8. Reactor according to claims 1 to 7,
characterised in that
the ratio of the smallest diameter of the mixing chamber to the diameter of the injector lance lies in the range between 1.1 : 1 and 5 : 1 and the partition between combustion chamber and reaction chamber has a thickness of between 50 and 500 mm.

9. Process for manufacturing carbon block by generating a flow of hot combustion gases in a combustion chamber, passing the hot combustion gases along a flow axis from the combustion chamber through a mixing chamber into a reaction chamber, wherein the flow cross-section of the mixing chamber is reduced compared with the combustion chamber and the reaction chamber, mixing carbon black raw material into the flow of the combustion gases before, inside or behind the mixing chamber by the spraying in or injection of the carbon black raw material, stopping off the carbon black formation downstream in the reaction chamber by the spraying in of water, and separating the carbon black formed from the flow of the combustion gases,
characterised in that
the combustion gases are prior to entry into the mixing chamber divided up into a central flow and one or more side-flows, that the central flow is passed through the mixing chamber and charged with carbon black raw material and that the side-flows are after expansion of the central flow in the reaction chamber fed to the peripheral areas of the central flow.

10. Process according to claim 9,
characterised in that
the side-flows are distributed concentrically in one or more hole circles around the flow axis and are fed to the central flow at an angle of between ± 45 ° relative to the flow axis.

11. Process according to claims 9 or 10,
characterised in that
the ratio of the sum of the side-flows to the volume flow of the central flow lies between 0.1 : 1 and 10 : 1, preferably between 1 : 1 and 10 : 1.

12. Process according to claims 10 to 11,
characterised in that
the total volume flow of the side-flows is adjustable continuously between 0 and its maximum value.

13. Process according to one of claims 11 to 12,
characterised in that
the volume flows of the side-flows are adjustable independently of one another between 0 and their maximum values.

14. Process according to one of claims 11 to 13,
characterised in that
there are fed to the peripheral areas of the carbon black-charged combustion gases in the reaction chamber, prior to the stopping off of the carbon black formation, further carbon-containing carbon black raw materials, finely-divided carbon black or coal dispersions and/or inert gases.

## Revendications

1. Réacteur pour la fabrication de noir de four contenant le long de l'axe du réacteur une chambre de combustion, une chambre de mélange et une chambre de réaction, qui sont en liaison les unes avec les autres et qui forment une voie d'écoulement pour les gaz de combustion chauds de la chambre de combustion, en passant par la chambre de mélange jusqu'à la chambre de réaction, la chambre de mélange étant réalisée en forme de zone axiale étroite dans une paroi de séparation séparant l'une de l'autre la chambre de combustion et la chambre de réaction, la chambre de combustion présentant en amont de la chambre de mélange des ouvertures d'entrée pour l'introduction d'un gaz contenant de l'oxygène et une disposition de brûleur ainsi que dans la chambre de mélange une ou plusieurs buses de projection ou de pulvérisation pour la matière première du noir de four, et où l'on trouve dans la chambre de réaction en aval de la chambre de mélange au moins une buse de trempe pour l'eau, pour arrêter la réaction de formation du noir de four,
caractérisé en ce que
la chambre de combustion et la chambre de réaction sont reliées entre elles, outre la chambre de mélange, par au moins une perforation de court-circuit secondaire dans la paroi de séparation.

2. Réacteur selon la revendication 1,
caractérisé en ce que
- les buses de projection ou de pulvérisation pour la matière première du noir de four se trouvent à la tête d'une lance d'injection axiale qui pour le positionnement des buses relativement à la direction du courant des gaz de combustion peut être déplacée devant, à l'intérieur ou juste derrière la chambre de mélange en direction axiale, et
- les buses de projection ou de pulvérisation mélangent la matière première du noir de four en direction axiale vers l'extérieur et/ou axiale vers l'aval dans le courant des gaz de combustion chauds.

3. Réacteur selon l'une des revendications 1 ou 2,
caractérisé en ce que
la chambre de mélange présente une section d'écoulement constante en direction axiale ou une section d'écoulement se rétrécissant vers l'aval de la chambre de combustion à la chambre de réaction.

4. Réacteur selon l'une des revendications 1 à 3,
caractérisé en ce que
les perforations de court-circuit secondaire sont disposées concentriquement sur un ou plusieurs cercles de trous dans la chambre de mélange et autour de l'axe du réacteur et peuvent être inclinées de ± 4° par rapport à l'axe du réacteur.

5. Réacteur selon les revendications 1 à 4,
caractérisé en ce que
le rapport de surface des surfaces de section de toutes les perforations de court-circuit secondaires à la surface de section de la section la plus étroite de la chambre de mélange se situe entre 0,1:1 et 1, de préférence entre 1:1 et 10:1.

6. Réacteur selon l'une des revendications 1 à 5,
caractérisé en ce que
les sections d'écoulement des perforations de court-circuit secondaires sont diminuées de façon continue ou entièrement fermées au moyen de bouchons de céramique.

7. Réacteur selon les revendications 1 à 6,
caractérisé en ce que
sont prévues dans la paroi de la chambre de réaction, en amont de la buse de trempe, d'autres buses de projection ou de pulvérisation pour matières premières de noir de four contenant du carbone, dispersions fines de noir de four ou de carbone et/ou gaz inertes, ces buses étant disposées soit radialement vers l'intérieur ou selon un angle inférieur à 90° par rapport à l'axe du réacteur vers l'amont ou vers l'aval.

8. Réacteur selon les revendications 1 à 7,
caractérisé en ce que
- le rapport du plus petit diamètre de la chambre de mélange au diamètre de la lance d'injection se situe dans un intervalle compris entre 1,1:1 et 5:1 et
- la paroi de séparation entre la chambre de combustion et la chambre de réaction présente une épaisseur comprise entre 50 et 500 mm.

9. Procédé de fabrication de noir de four par production d'un courant de gaz de combustion chauds dans une chambre de combustion, conduction des gaz de combustion chauds le long d'un axe d'écoulement de la chambre de combustion à travers une chambre de mélange dans une chambre de réaction, dans lequel la section d'écoulement de la chambre de mélange est diminuée par rapport à la chambre de combustion et à la chambre de réaction, mélange de matières premières de noir de four dans le courant des gaz de combustion devant, dans ou derrière la chambre de mélange, par pulvérisation ou projection de la matière première de noir de four, arrêt de la formation de noir de four en aval dans la chambre de réaction par pulvérisation d'eau et séparation du noir de four formé d'avec le courant des gaz de combustion,
caractérisé en ce que
- les gaz de combustion avant de pénétrer dans la chambre de mélange sont divisés en un courant central et en un ou plusieurs courants secondaires,
- le courant central conduit à travers la chambre de mélange et est chargé en matière première de noir de four, et
- les courants secondaires, après dilatation du courant central dans la chambre de réaction, sont conduits dans les zones périphériques du courant central.

10. Procédé selon la revendication 9,
caractérisé en ce que
les courants secondaires sont divisés concentriquement sur un ou plusieurs cercles de trous autour de l'axe d'écoulement et sont introduits dans le courant central sous un angle compris entre ± 45° par rapport à l'axe d'écoulement.

11. Procédé selon les revendications 9 ou 10,
caractérisé en ce que
la rapport de la somme des courants secondaires et le volume de courant de la zone centrale se situe entre 0,1:1 et 10:1, de préférence entre 1:1 et 10:1.

12. Procédé selon les revendications 10 à 11,
caractérisé en ce que
le volume total des courants secondaires peut être réglé de façon continue entre zéro et sa valeur maximale.

13. Procédé selon l'une des revendications 11 à 12,
caractérisé en ce que
les volumes des courants secondaires peuvent être réglés indépendamment entre zéro et leur valeur maximale.

14. Procédé selon l'une des revendications 11 à 13,
caractérisé en ce qu'
on introduit d'autres matières premières de noir de four contenant du carbone, de fines dispersions de noir de four ou de carbone et/ou des gaz inertes dans les zones périphériques des gaz de combustion chargés en noir de four dans la chambre de réaction avant l'arrêt de la formation de noir de four.
